# EUROPÄISCHE PATENTSCHRIFT

(11) **EP 1 321 278 B1**
(45) Veröffentlichungstag und Bekanntmachung des Hinweises auf die Patenterteilung: **02.03.2005**
(21) Anmeldenummer: 02027342.1
(22) Anmeldetag: 07.12.2002
(51) Int. Cl.: B29C 45/84

(54) **Vorrichtung zur Sicherung der geöffneten Schliesseinheit einer Spritzgiessmaschine**
Apparatus for securing the open clamping unit of an injection moulding machine
Appareil pour arrêter le dispositif de fermeture ouvert d'une presse à injecter

(30) Priorität: 21.12.2001 DE 10163442
(43) Veröffentlichungstag der Anmeldung: 25.06.2003
(73) Patentinhaber: Krauss-Maffei Kunststofftechnik GmbH, 80997 München (DE)
(72) Erfinder: Zelleröhr, Michael, 47533 Kleve (DE); Staudacher, Friedrich, 82223 Eichenau (DE)
(74) Vertreter: Zollner, Richard, Dipl.-Phys.

(56) Entgegenhaltungen:
- DE-A- 3 042 712
- US-A- 3 728 057
- US-A- 5 834 036
- PATENT ABSTRACTS OF JAPAN vol. 013, no. 296 (M-846), 10. Juli 1989 (1989-07-10) & JP 01 087321 A (NISSEI PLASTICS IND CO), 31. März 1989 (1989-03-31)

## Beschreibung

Die Erfindung bezieht sich auf eine Vorrichtung zur Sicherung der geöffneten Schließeinheit einer Spritzgießmaschine gegen ein unprogrammgemäßes Zufahren der Schließeinheit (Zulaufsicherung) mit einer die beiden Formaufspannplatten der Schließeinheit in Öffnungsstellung haltenden mechanischen Blockiereinheit, die beim Öffnen der Gehäusetüren der Spritzgießmaschine selbsttätig aktivierbar ist, gemäß dem Oberbegriff des Anspruchs 1.

Bei bekannten Sicherungsvorrichtungen dieser Art ist an der beweglichen Formaufspannplatte ein mit einer Verzahnung versehener Sperrbalken befestigt, der die gegenüberliegende feste Formaufspannplatte in einer Öffnung durchsetzt, an der sich ein Stellelement befindet, mit dem eine Sperrklinke in die Verzahnung des Sperrbalkens ein- und ausfahrbar ist. Das Stellelement wird von den Positionssignalen eines Schalters aktiviert, der von der Schutztür bei Erreichen der Öffnungsstellung betätigt wird. Diese Schutzeinrichtung erfordert einen verhältnismäßig hohen Bau- und Wartungsaufwand und beeinträchtigt die Zugänglichkeit zwischen den Formaufspannplatten. Dies wirkt sich insbesondere bei einem Werkzeugwechsel und bei der Anordnung von den zwischen-eingreifenden Handlinggeräten nachteilig aus.

Aus der JP-A-01087321 ist eine Sicherungsvorrichtung der genannten Art für eine Vertikalschließeinheit einer Spritzgießmaschine bekannt. An der beweglichen, vertikal verfahrbaren Formaufspannplatte ist ein Sperrstab mit Ringnuten angebracht und an einer ortsfesten Trägerplatte ist ein hydraulisch betätigbarer Sperrschieber vorgesehen. Im geöffneten Zustand der Schließeinheit greift der an der Trägerplatte befestigte Sperrschieber in eine Ringnut ein und verhindert das ungewollte Herunterfahren der beweglichen Formaufspannplatte aufgrund ihres Eigengewichts. Zum Lösen der Sperre wird der Sperrschieber hydraulisch in eine Position verfahren, in der der Sperrschieber den Sperrstab freigibt und der Sperrstab ungehindert durch den Sperrschieber hindurchbewegt werden kann. Diese Schutzeinrichtung beeinträchtigt zwar nicht die Zugänglichkeit zwischen den Formaufspannplatten, ist jedoch auf Vertikalschließeinheiten beschränkt.

Der Erfindung liegt die Aufgabe zu Grunde eine Vorrichtung zur Sicherung der geöffneten Schließeinheit einer Spritzgießmaschine gegen ein unprogrammgemäßes Schließen der Schließeinheit mit einfachen Mitteln so zu verbessern, dass unter Gewährleistung und Steigerung der Sicherheit die Zugänglichkeit zwischen den Formaufspannplatten unbeeinträchtigt bleibt und die sowohl für vertikale als auch für horizontale Schließeinheiten verwendbar ist.

Diese Aufgabe wird durch die im Anspruch 1 gekennzeichnete Erfindung gelöst.

Es ergibt sich der Vorteil, dass die Blockierung der Bewegungsfähigkeit der beweglichen Formaufspannplatten bereits in der Antriebseinheit, vorzugsweise unmittelbar an der Antriebswelle des Drehmotors der Antriebseinheit angesetzt werden kann. Für den Fall, dass eine unbeabsichtigt einsetzende Schließbewegung zu blockieren ist, können die beweglichen Teile der Schließeinheit, wie die bewegliche Formaufspannplatte, und wesentliche Bestandteile der Antriebseinheit für die bewegliche Formaufspannplatte, wie z. B. Spindelantriebe oder Kniehebelantriebe, unbelastet bleiben. Auch unsymmetrische Belastungen der Schließeinheit, wie sie nach dem Stand der Technik mit einem außerzentrisch zwischen den Formaufspannplatten angeordneten Sperrbalken auftreten können, lassen sich nach der Erfindung ausschließen.

Vorteilhafte Ausgestaltungen der Erfindung ergeben sich aus den Unterensprüchen.

Die Erfindung wird nachfolgend in Gegenüberstellung zu einer Ausführungsform nach dem Stand der Technik anhand der Zeichnung näher beschrieben. Es zeigen in stark schematisierter Darstellung:
- Fig. 1: Die Seitenansicht der Schließeinheit einer Spritzgießmaschine mit Zulaufsicherung nach dem Stand der Technik,
- Fig. 2: die Seitenansicht einer erfindungsgemäßen Zulaufsicherung,
- Fig. 3: die Ansicht auf die Blockiereinheit gemäß Fig. 2 in der Ansichtsrichtung nach Pfeil A und
- Fig. 4: eine alternative Zulaufsicherung nach der Erfindung mit an der geöffneten Schutztür angeordneten und im Eingriff mit dem Sperrrad des Antriebsmotors befindlichen Sperrklinke.

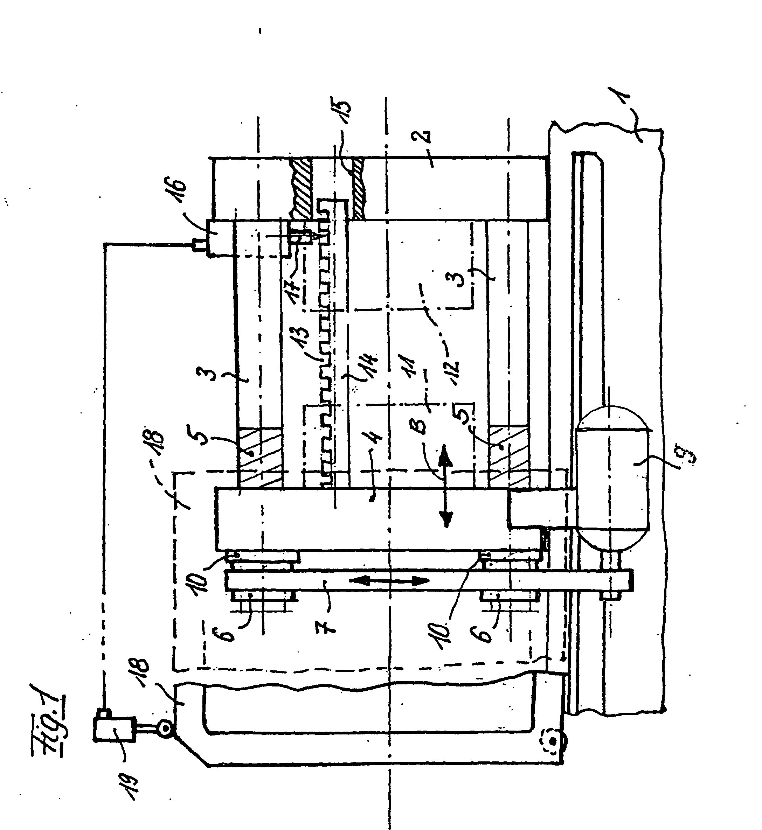

Die Fig. 1 zeigt die Seitenansicht einer 2-Platten-Schließeinheit einer Spritzgießmaschine mit einer Zulaufsicherung nach dem Stand der Technik. Die Schließeinheit besteht aus der mit dem Maschinenbett 1 fest verbundenen festen Formaufspannplatte 2 in der vier Säulen 3 befestigt sind, deren der festen Formaufspannplatte 2 abgewandte Enden die bewegliche Formaufspannplatte 4 durchsetzen und als Gewindespindeln 5 ausgebildet sind. Die Gewindespindeln 5 bilden mit den Spindelmuttern 6 einen nicht näher dargestellten Spindelantrieb zur Bewegung der beweglichen Formaufspannplatte 4 in Öffnungs- und Schließrichtung (Pfeil B). Die Spindelmuttern 6 werden über einem Zahnriemen oder einer Zahnkette 7 von einem Drehmotor 9 angetrieben, der an der beweglichen Formaufspannplatte 4 befestigt ist und aus einem Elektro- oder Hydromotor bestehen kann.

An den beiden Formaufspannplatten 2 und 4 sind jeweils zwei Formhälften 11 und 12 befestigt, die nur in strichpunktierten Linien angedeutet sind.

An der beweglichen Formaufspannplatte 4 ist ein mit Verzahnungskerben 13 versehener Sperrbalken 14 befestigt, der in eine in der festen Formaufspannplatte 2 ausgebildete Öffnung 15 ragt. Im Bereich der Öffnung 15 ist an der festen Formaufspannplatte 2 ein Stellelement 16 befestigt, mit dem eine Sperrklinke 17 zu den Verzahnungskerben 13 des Sperrbalkens 14 in Ver- und Entriegelungsstellung verfahrbar ist. Der Sperrbalken 14 und die Öffnung 15 sind außerhalb des Aufspannbereichs der Formhälften 11 und 12 im Randbereich der Formaufspannplatten 2 und 4 angeordnet.

Auf dem Maschinenbett 1 ist eine die Schließeinheit abdeckende Schutztür 18 verfahrbar angeordnet. Die zum Teil nur in Umrissen dargestellte Schutztür 18 befindet sich in geöffneter Position, in der der Raum zwischen den Formaufspannplatten 2 und 4 zugänglich ist und in der von der linken oberen Kante der Schutztür 18 ein Positionsschalter 19 aktiviert ist, mit dessen Stellsignal das Stellelement 16 so angesteuert wird, dass in der Öffnungsstellung der Schutztür 18 die Sperrklinke 17 in eine Verzahnungskerbe 13 des Sperrbalkens 14 einrastet. In dieser Betriebstellung ist die Schließeinheit gegen unprogrammgemäßes Zulaufen gesichert.

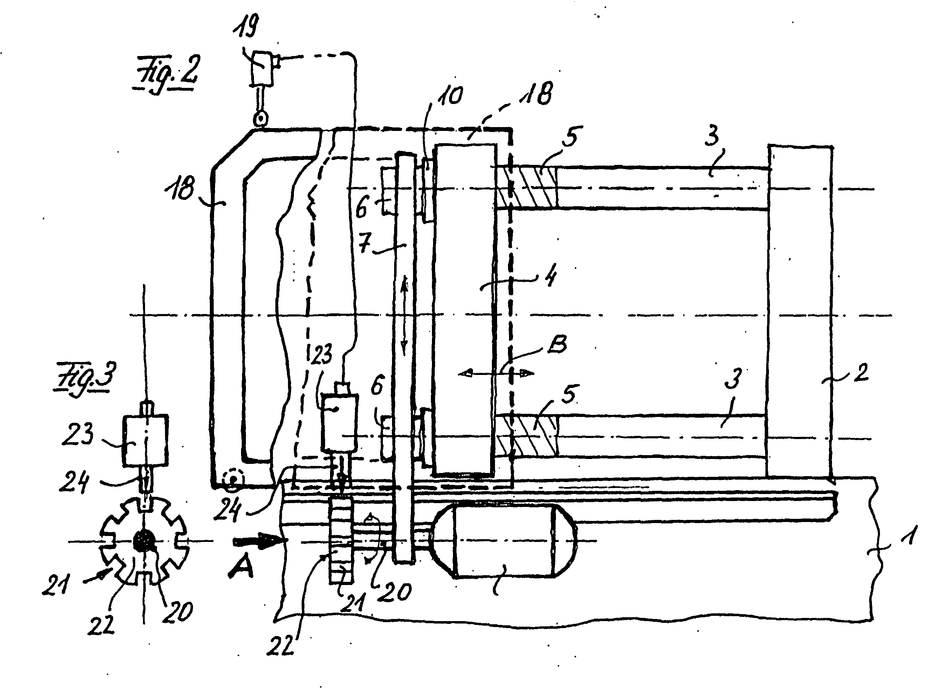

Die in Fig. 2 dargestellte Schließeinheit mit der Schutztür 18 entspricht bis auf den fehlenden Sperrbalken und das Stellelement 16 mit der Sperrklinke 17 im wesentlichen der Schließeinheit nach Fig. 1 und ist demgemäß mit gleichen Bezugszeichen versehen. Insoweit wird auch auf die Beschreibung zu Fig. 1 verwiesen.

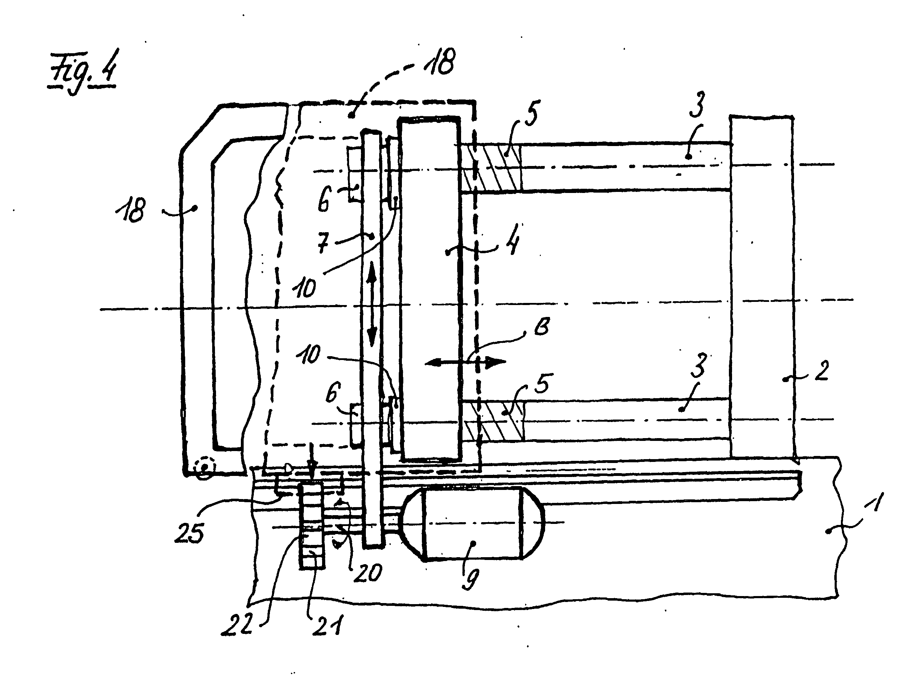

Die Fig. 2 und 3 zeigen eine erfindungsgemäße Zulaufsicherung, die im wesentlichen darin besteht, dass die Antriebswelle 20 des Drehmotors 9 ein mit Verzahnungskerben 21 versehenes Sperrrad 22 aufweist, in das die von einem Stellelement 23 betätigbare Sperrklinke 24 ein- und ausfahrbar ist. Das Stellelement 23 wird von den Positionssignalen des Positionsschalters 19 aktiviert. In der in Fig. 2 dargestellten Betriebsphase befindet sich die Schutztür 18 in geöffneter Stellung, in der vom Positionsschalter 19 das Stellelement 21 so angesteuert wird, dass die Sperrklinke 24 in einer Verzahnungskerbe 21 des Sperrrades 22 einrastet und somit die gesamte Antriebseinheit der 2-Plattenschließeinheit blockiert. In dieser Antriebsstellung ist die Schließeinheit gegen unprogrammgemäßes Zulaufen gesichert.

Die Ausführungsform nach Fig. 4 entspricht bis auf das Fehlen des Positionsschalters 19 und des Stellelements 23 mit der Sperrklinke 24 der Ausführungsform nach den Figuren 2 und 3. Im Rahmen der Übereinstimmung werden daher gleiche Bezugszeichen verwendet und es wird diesbezüglich auf die entsprechenden Beschreibungsteile verwiesen.

An der Schutztür 18 nach Fig. 4 ist eine Sperrklinke 25 befestigt, die in der dargestellten geöffneten Position verriegelnd in die Verzahnungskerbe 21 im Sperrrad 22 eingefahren ist, womit die Antriebseinheit der Schließeinheit blockiert ist. Diese direkt wirkende mechanische Zulaufsicherung stellt lediglich ein vorteilhaftes Ausführungsbeispiel dar, grundsätzlich sind jedoch auch andere Ausführungsformen geeignet, bei denen von der Schutztür 18 in der Öffnungsposition auf mechanischem Wege Sperrklinken betätigt werden, die verriegelnd in Verzahnungskerben von Funktionselementen der Antriebseinheit einrasten.

## Patentansprüche

1. Vorrichtung zur Sicherung der geöffneten Schließeinheit einer Spritzgießmaschine gegen ein unprogrammgemäßes Zufahren der Schließeinheit, mit einer die beiden Formaufspannplatten (2, 4) der Schließeinheit in Öffnungsstellung haltenden mechanischen Blockiereinheit (9, 20, 21, 22, 23, 24), die beim Öffnen der Schutztür (18) der Schutzummantelung der Spritzgießmaschine selbsttätig aktivierbar ist,
**dadurch gekennzeichnet,**
**dass** die Blockiereinheit (9, 20, 21, 22, 23, 24) in der die Öffnungs- und Schließbewegung bewerkstelligenden Antriebseinheit (9, 20, 7, 6) und außerhalb des zwischen den Formaufspannplatten (2, 4) gelegenen Raumes angeordnet ist.

2. Vorrichtung nach Anspruch 1, **dadurch gekennzeichnet, dass** die Antriebseinheit einen Drehmotor (9) aufweist, an dessen Antriebswelle (20) die Blockiereinheit angeordnet ist.

3. Vorrichtung nach Anspruch 1 oder 2, **dadurch gekennzeichnet, dass** die Blockiereinheit aus einem Zahngesperre mit steuerbarer Sperrklinke (24) besteht.

4. Vorrichtung nach einem der Ansprüche 2 oder 3, **dadurch gekennzeichnet, dass** das Zahngesperre aus einem auf der Antriebswelle (20) des Drehmotors (9) angeordneten Sperrrades (22) besteht.

5. Vorrichtung nach Anspruch 1 oder 2, **dadurch gekennzeichnet, dass** die Blockiereinheit aus einem Klemmgesperre mit steuerbarer Klemmbacke besteht.

6. Vorrichtung nach einem der Ansprüche 2 oder 5, **dadurch gekennzeichnet, dass** das Klemmgesperre aus einem auf der Antriebswelle des Drehmotors angeordneten Klemmrad besteht.

7. Vorrichtung nach Anspruch 1 oder 2, **dadurch gekennzeichnet, dass** die Blockiereinheit eine Reibbremse ist.

8. Vorrichtung nach einem der Ansprüche 2 oder 7, **dadurch gekennzeichnet, dass** die Reibbremse auf der Antriebswelle des Drehmotors angeordnet ist.

9. Vorrichtung nach einem der Ansprüche 2 bis 8, **dadurch gekennzeichnet, dass** der Drehmotor (9) Antriebsmotor eines Spindelantriebes der Schließeinheit ist.

10. Vorrichtung nach einem der Ansprüche 2 bis 8, **dadurch gekennzeichnet, dass** der Drehmotor (9) Antriebsmotor eines Kniehebelantriebes der Schließ-einheit ist.

11. Vorrichtung nach einem der Ansprüche 1 bis 10, **dadurch gekennzeichnet, dass** die Blockiereinheit über ein Stellelement (19) aktivierbar ist, das bei geöffneter Schutztür (18) von einem Tür-Positionsschalter (19) ansteuerbar ist.

12. Vorrichtung nach einem der Ansprüche 1 bis 10, **dadurch gekennzeichnet, dass** die Blockiereinheit über ein Stellelement aktivierbar ist, das durch die Maschinensteuerung ansteuerbar ist.

13. Vorrichtung nach einem der Ansprüche 3 oder 4, **dadurch gekennzeichnet, dass** die Schutztür (18) eine Sperrklinke (25) aufweist, die bei geöffneter Schutztür (18) im Zahngesperre in Sperrstellung positionierbar ist.

## Claims

1. Apparatus for securing the open clamping unit of an injection moulding machine to prevent the non-programmed closing of the clamping unit, having a mechanical blocking unit (9, 20, 21, 22, 23, 24) that keeps the two die platens (2, 4) of the clamping unit in the open position and can be activated when the protective door (18) of the protective casing of the injection moulding machine is opened,
**characterised in that** the blocking unit (9, 20, 21, 22, 23, 24) is disposed in the drive unit (9, 20, 7, 6) that produces the opening and closing movement and outside the area situated between the die platens (2, 4).

2. Apparatus according to Claim 1,
**characterised in that** the drive unit comprises a rotary motor (9), on the drive shaft (20) of which the blocking unit is disposed.

3. Apparatus according to Claim 1 or 2,
**characterised in that** the blocking unit consists of a tooth locking mechanism with a controllable detent pawl (24).

4. Apparatus according to one of Claims 2 or 3,
**characterised in that** the tooth locking mechanism consists of a locking wheel (22) disposed on the drive shaft (20) of the rotary motor (9).

5. Apparatus according to Claim 1 or 2,
**characterised in that** the blocking unit consists of a silent ratchet with a controllable clamping jaw.

6. Apparatus according to one of Claims 2 or 5,
**characterised in that** the silent ratchet consists of a clamping wheel disposed on the drive shaft of the rotary motor.

7. Apparatus according to Claim 1 or 2,
**characterised in that** the blocking unit is a friction brake.

8. Apparatus according to one of Claims 2 or 7,
**characterised in that** the friction brake is disposed on the drive shaft of the rotary motor.

9. A device according to one of Claims 2 to 8,
**characterised in that** the rotary motor (9) is a drive motor of a spindle drive of the clamping unit.

10. Apparatus according to one of Claims 2 to 8,
**characterised in that** the rotary motor (9) is a drive motor of a toggle drive of the clamping unit.

11. Apparatus according to one of Claims 1 to 10,
**characterised in that** the blocking unit can be activated by a control element (19), which can be controlled by a door position switch (19) when the protective door (18) is open.

12. Apparatus according to one of Claims 1 to 10,
**characterised in that** the blocking unit can be activated via a control element which is controlled by the machine control unit.

13. Apparatus according to one of Claims 3 or 4,
**characterised in that** the protective door (18) comprises a detent pawl (25), which can be positioned in the tooth locking mechanism in the locking position when the protective door (18) is open.

## Revendications

1. Dispositif pour protéger l'unité de fermeture d'une machine de moulage par injection contre un démarrage non conforme au programme de l'unité de fermeture, avec une unité de blocage mécanique (9, 20, 21, 22, 23, 24) maintenant en position d'ouverture les deux plaques de fixation des moules (2, 4) de l'unité de fermeture, unité de blocage qui peut s'activer automatiquement lors de l'ouverture de la porte de protection (18) du revêtement protecteur de la machine de moulage par injection, **caractérisé en ce que** l'unité de blocage (9, 20, 21, 22, 23, 24) est disposée dans l'unité d'entraînement (9, 20, 7, 6) exécutant le mouvement d'ouverture et de fermeture, et à l'extérieur de l'espace situé entre les plaques de fixation des moules (2, 4).

2. Dispositif selon la revendication 1, **caractérisé en ce que** l'unité d'entraînement comporte un moteur couple (9), à l'arbre moteur (20) duquel est disposée l'unité de blocage.

3. Dispositif selon la revendication 1 ou 2, **caractérisé en ce que** l'unité de blocage se compose d'un mécanisme de verrouillage par encliquetage avec un cliquet (24) pouvant être commandé.

4. Dispositif selon l'une des revendications 2 ou 3, **caractérisé en ce que** le mécanisme de verrouillage par encliquetage est constitué d'une roue d'arrêt (22) disposée sur l'arbre moteur (20) du moteur couple (9).

5. Dispositif selon la revendication 1 ou 2, **caractérisé en ce que** l'unité de blocage comporte un mécanisme de verrouillage par serrage avec une mâchoire de serrage pouvant être commandée.

6. Dispositif selon l'une des revendications 2 ou 5, **caractérisé en ce que** le mécanisme de verrouillage par serrage se compose d'une roue de serrage disposée sur l'arbre moteur du moteur couple.

7. Dispositif selon la revendication 1 ou 2, **caractérisé en ce que** l'unité de blocage est un frein à friction.

8. Dispositif selon l'une des revendications 2 ou 7, **caractérisé en ce que** le frein à friction est disposé sur l'arbre moteur du moteur couple.

9. Dispositif selon l'une des revendications 2 à 8, **caractérisé en ce que** le moteur couple (9) est le moteur de commande d'une commande de broches de l'unité de fermeture.

10. Dispositif selon l'une des revendications 2 à 8, **caractérisé en ce que** le moteur couple (9) est le moteur de commande d'un entraînement à genouillère de l'unité de fermeture.

11. Dispositif selon l'une des revendications 1 à 10, **caractérisé en ce que** l'unité de blocage est activable via un élément de réglage (19) qui peut être commandé par un interrupteur de position (19) lorsque la porte de protection (18) est ouverte.

12. Dispositif selon l'une des revendications 1 à 10, **caractérisé en ce que** l'unité de blocage est activable via un élément de réglage qui peut être commandé par la commande de machine.

13. Dispositif selon l'une des revendications 3 ou 4, **caractérisé en ce que** la porte de protection (18) comporte un cliquet (25) qui est positionnable en position de fermeture dans le mécanisme de verrouillage par encliquetage lorsque la porte de protection (18) est ouverte.
